Europäisches Patentamt

(19) European Patent Office

Office européen des brevets

(11) Publication number: **0 160 625**
A2

## (12) EUROPEAN PATENT APPLICATION

(21) Application number: 85830095.7

(22) Date of filing: 22.04.85

(51) Int. Cl.⁴: **B 28 D 1/12**
**B 23 D 61/18**

(30) Priority: 27.04.84 IT 5330784 U

(43) Date of publication of application:
06.11.85 Bulletin 85/45

(84) Designated Contracting States:
AT BE CH DE FR GB LI LU NL SE

(71) Applicant: Brocco, Emilio
Via Alice 31
I-10010 Lessolo (Torino)(IT)

(71) Applicant: Oberto Tarena, Felicino
Via Arduino Casale 37
I-10010 Lessolo (Torino)(IT)

(72) Inventor: Brocco, Emilio
Via Alice 31
I-10010 Lessolo (Torino)(IT)

(72) Inventor: Oberto Tarena, Felicino
Via Arduino Casale 37
I-10010 Lessolo (Torino)(IT)

(74) Representative: Buzzi, Franco et al,
c/o Jacobacci-Casetta & Perani S.p.A. Via Alfieri, 17
I-10121 Torino(IT)

(54) Diamond wire for cutting stone and marble.

(57) A diamond wire for cutting stone and marble comprises a metal rope (1) on which diamond-set bushes (2) are mounted at regular intervals and are made fast with the rope (1) by annular layers of thermoplastic rubber (4) interposed between the bushes (2) and the rope (1) by moulding.

FIG. 1

Diamond wire for cutting stone and marble          **0160625**

The present invention relates to wires for cutting stone and marble, of the type comprising a wire rope on which diamond-set bushes spaced from each other by resilient elements surrounding the rope are mounted at regular intervals.

In known wires of this type, the diamond-set bushes, commonly called "beads", are mounted on the rope so as to be freely rotatable. During its advance over the surface of the material being cut, the rope, normally formed by helically-wound metal strands, tends to rotate. The diamond-set bushes, precisely because they are rotatable on the rope, do not follow its rotary motion but tend to maintain a constant orientation in the opening in the material being cut. Consequently, the diamond-set bushes wear rapidly and must be replaced frequently.

The object of the present invention is to avoid this disadvantage and to provide a diamond wire of the type defined initially, which has a considerably longer working life than conventional wires.

According to the invention, this object is achieved by the fact that the diamond-set bushes are made fast with the rope by annular layers of thermoplastic rubber interposed between the bushes and the rope by moulding.

By virtue of this characteristic, in use of the wire, the bushes assume the same rotational-translational movement as the metal rope to which they are fixed and are thus subject to less localised and more uniform wear of their diamond-set surfaces. Clearly, this means a longer working life for these bushes.

According to the invention, the thermoplastic rubber layers form part of a single sheath applied continuously to the rope and the portions thereof interposed between the pairs of adjacent diamond-set bushes constitute the resilient members.

The metal helical springs which are conventionally used as resilient members on known diamond wires are thus eliminated, with obvious advantages with regard to the ease and cheapness of manufacture.

This conformation also allows the diamond wire according to the invention to be made in the form of a closed loop without the need to use auxiliary connecting members. In fact, to advantage, the ends of the metal rope can be joined by splicing after the fitting of the diamond-set bushes, after which the thermoplastic rubber sheath can be moulded onto the rope without any difficulty.

The invention will now be described in detail with reference to the appended drawings, provided purely by way of non-limiting example, in which:

Figure 1 is a longitudinal sectional view of a portion of diamond wire according to the invention, and

Figure 2 is a schematic elevational view of a diamond wire according to the invention in the form of a closed loop.

The diamond wire according to the invention comprises a rope 1 constituted by a plurality of helically-wound metal strands.

A plurality of metal bushes 2 are mounted in evenly spaced positions on the rope 1.

Each bush 2 has a circumferential diamond coating 7 and reduced axial appendages 3.

The bushes 2 are fixed rigidly to the rope 1 by respective annular layers of thermoplastic rubber 4, for instance polyuretane rubber, interposed between the bushes 2 and the rope 1.

In practice, the annular layers 4 constitute thinner portions of a single thermoplastic rubber sheath 5 moulded onto the rope 1. The portions 6 of the sheath 5 interposed between the pairs of adjacent bushes 2 incorporate the axial appendages 3 thereof and constitute resilient spacer members between these bushes 2.

The diamond wire described above can be manufactured particularly simply and economically. In fact, its manufacture involves firstly the positioning of the bushes 3 at predetermined intervals along the rope 1 and subsequently the moulding of the thermoplastic rubber intended to form the sheath 5. This application is carried out in suitable moulds in which the various consecutive portions of the rope 1 with their bushes 2 are positioned successively.

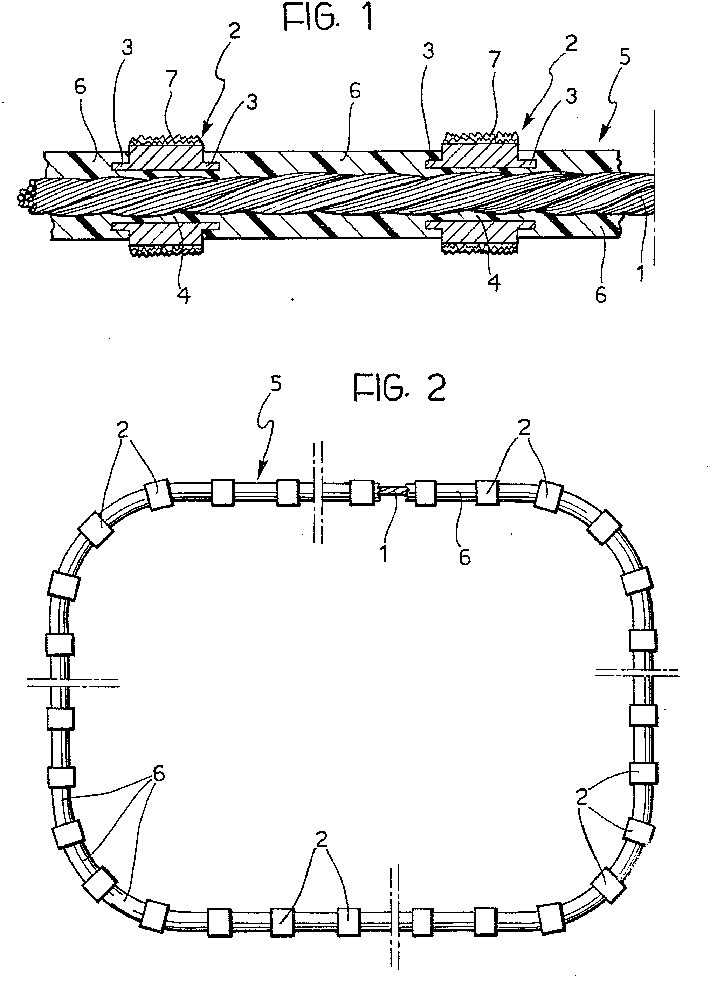

It is well known that diamond wires for cutting stone and marble have a closed loop configuration. In the case of the wire according to the invention, this configuration can be achieved by joining the ends of the rope by an auxiliary connecting member as in the case of diamond wires of the prior art, or to advantage by splicing. This configuration, as illustrated in Figure 2, is particularly advantageous in that it allows the elimination of the auxiliary connecting members which are necessary for conventional diamond wires but constitute well-known critical points subject to rapid wear.

The manner in which the diamond wire according to the invention is formed with the diamond-set bushes torsionally rigid with the rope and with the ends of the rope spliced together thus ensures that the wire has a considerably longer working life than conventional wires.

CLAIMS

1. Diamond wire for cutting stone and marble, comprising a metal rope (1) on which diamond-set bushes (2) spaced from each other by resilient members surrounding the rope are mounted at regular intervals, characterised in that the diamond-set bushes (2) are made fast with the rope (1) by annular layers of thermoplastic rubber (4) interposed between the bushes (2) and the rope (1) by moulding.

2. Diamond wire according to Claim 1, characterised in that the annular layers (4) form part of a single thermoplastic rubber sheath (5) applied continuously to the rope (1) and the portions (6) thereof interposed between the pairs of adjacent diamond-set bushes (2) constitute the resilient elements.

3. Diamond wire according to Claims 1 and 2, characterised in that it has the form of a closed loop with the ends of the rope (1) connected together by splicing.

1/1

## FIG. 1

## FIG. 2